(19) Europäisches Patentamt
European Patent Office
Office européen des brevets

(11) EP 1 044 994 A1

(12) EUROPEAN PATENT APPLICATION

(43) Date of publication:
18.10.2000 Bulletin 2000/42

(51) Int. Cl.[7]: **C08F 279/02**, C08F 291/02

(21) Application number: 00107944.1

(22) Date of filing: 14.04.2000

(84) Designated Contracting States:
AT BE CH CY DE DK ES FI FR GB GR IE IT LI LU MC NL PT SE
Designated Extension States:
AL LT LV MK RO SI

(30) Priority: 15.04.1999 US 129405 P
29.03.2000 US 538619

(71) Applicant:
ATOFINA CHEMICALS, INC.
Philadelphia PA 19102-3222 (US)

(72) Inventor: Wicher, Jerome
Collegeville, Pennsylvania 19426 (US)

(74) Representative:
Morf, Jan Stefan, Dr. Dipl.-Chem. et al
Patentanwälte Abitz und Partner
Postfach 86 01 09
81628 München (DE)

# (54) Process for preparation of elastomer modified polymer compositions with enhanced rubber phase volume fraction

(57) A process is provided to prepare elastomer modified polymer compositions based on styrenic monomer(s) using certain organic peroxide initiators to increase both rubber particle size and rubber phase volume fraction (gel content).



Printed by Xerox (UK) Business Services
2.16.7 (HRS)/3.6

## Description

This Application claims priority from Provisional Application 60/129,405, filed April 15,1999.

## BACKGROUND OF THE INVENTION

The present invention relates to organic peroxides and their use in the production of unsaturated elastomer-modified polystyrene or poly(styrene-co-monomer) compositions(HIPS, ABS and the like). More particularly, the present invention relates to processes that use specific organic peroxide initiators to substantially enhance the rubber phase volume fraction (RPVF, gel traction or gel volume) and rubber particle size of such modified polystyrene or poly (styrene-co-monomer) compositions. For convenience, such compositions will be referred to as elastomer modified polymer compositions.

Larger gel volumes, which may be, partially, the result of increased grafting, improve utilization of the elastomer component of a given elastomer modified polymer composition. Rubber particle size is a parameter known to affect performance of such elastomer modified polymer compositions. Increased gel content and/or increased particle size can often significantly improve overall properties of an elastomer modified polymer composition.

Conventional wisdom has long held that effective grafting from unsaturated elastomers with organic peroxides was only productive with high energy radicals (e.g., t-butoxy, aliphatic carboxy, or aromatic carboxy) derived from tertiary butyl peroxyesters, tertiary butyl peroxyketals or diacyl type peroxides. It was reasoned that higher-energy radicals have a higher probability of producing grafts that increase gel levels. This perception remains widespread and is noted in recent literature dealing with the subject. see, for example, Sundberg and Huang, Grafting reactions III, J. Polymer Science: Part A: Polymer Chemistry, (1995) 33, 2571-2586.

Amyl peroxide initiators, i.e., those derived from t-amyl hydroperoxide, generate t-amyloxy radicals which undergo a very rapid beta-scission reaction to yield relatively low-energy ethyl (carbon) radicals (Kirchgessner, Kamath, Stromberg and Sheppard, Modern Plastics (Nov. 1984) 61, 66). Similar Beta-scission reactions are also expected for higher t-alkoxy radicals and diradicals (e.g. t-hexyl, t-heptyl, t-octyl, 2,5-dimethyl-2,5-hexanediyl, etc.), which likewise, produce corresponding low-energy alkyl radicals. Consequently, such initiators typically have been avoided in applications requiring grafting of styrene and/or optional comonomers onto the backbone of unsaturated elastomers such as polybutadiene.

Acrylonitrile-butadiene-styrene resin (ABS) prepared with an amyl perester was noted to provide improved impact performance over an analogous resin prepared using a butyl perester. (Res. Discl. (1983), 233, 281). No explanation for the improved performance was offered. Further, the comparison was highly unusual as the two peresters have significantly different half life temperatures and would not ordinarily be employed under similar conditions. Based on this disclosure alone, any performance differences could reasonably have been attributed to the substantial half life temperature differential of the initiators.

Another reference covered the potential use of an amyl peroxide for styrenic resin polymerization, but only offered an example indicating the use of a butyl peroxide for the preparation of ABS (Res. Discl. (1985), 249, 42). There was no citation of any specific advantages supporting a preference for the amyl peroxide in this application.

Amyl initiators were, in fact, specifically selected in polyol graft applications to limit grafting, and thereby produce superior formulations (Palys and Kamath, Modern Plastics, (1988) 65(7), 76-80).

The amount of graft copolymer is believed to influence the interfacial relationship between dissimilar phases, such as, for example, those found in high impact polystyrene (HIPS) prepolymer compositions. The nature of the interfacial relationship is accepted as significantly affecting final polymer morphology. (M. Fischer and G. P. Hellmann, Macromolecules (1996) 29, 2498). It was pointed out (Turley and Keskkula, Polymer (1980) 21, 466) that notched Izod impact strength in HIPS increases linearly with rubber phase volume fraction (RPVF). Particle size also significantly influences impact properties. Peng asserts (J. Appl. Pol. Sci. (1990) 40, 1289-1302) that the morphology and structure of the dispersed elastomer phase are two of the most important parameters influencing product properties. Thus, it is widely recognized by those skilled in the art that grafting of unsaturated elastomers, like polybutadiene, is critical to the performance of HIPS, acrylonitrile-butadiene-styrene compositions and similar elastomer modified polymer compositions.

The present invention provides a novel process for controlling rubber phase volume, particle size and possibly extent of grafting to the rubber phase; thus, providing an improved elastomer modified polymeric composition.

## SUMMARY OF INVENTION

The present invention provides a process for producing an elastomer modified polymer composition which comprises polymerizing at least one styrenic monomer in the presence of 0.5 to 15 percent by weight (based on styrene monomer weight) of an unsaturated elastomer and 20 ppm to 1000 ppm by weight of one or more of the organic peroxides represented by the following general formulas:

I

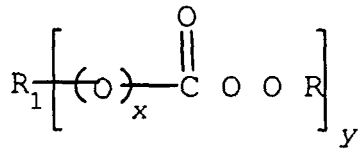

wherein x is 0 or 1; R is a t-alkyl radical of 5 to 10 carbon atoms, unsubstituted or substituted with hydroxy, alkoxycarbonyloxy, or alkylcarbonyloxy groups, a t-aralkyl radical of 9 to 13 carbon atoms, or a t-cycloalkyl radical of 6 to 12 carbon atoms; y is 1 or 2;

when y=1, $R_1$ is an alkyl radical of 1 to 12 carbon atoms, an aralkyl radical of 7 to 14 carbon atoms, a cycloalkyl radical of 3 to 12 carbon atoms or a phenyl radical, said $R_1$ radicals may be unsubstituted, or substituted with one or more alkyl or alkoxy groups of 1 to 4 carbon atoms;

when y=2, $R_1$ is an alkyl diradical of 2 to 12 carbon atoms, an aralkyl diradical of 8 to 14 carbon atoms, a cycloalkyl diradical of 3 to 12 carbon atoms or a phenyl diradical, said diradicals may be unsubstituted, or substituted with one or more alkyl, or alkoxy groups of 1 to 4 carbon atoms;

II

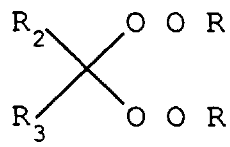

wherein R is as defined herein above; $R_2$ and $R_3$ are alkyl or alkenyl radicals of 1 to 12 carbon atoms which may be unsubstituted, or substituted with one or more alkyl or alkoxy groups of 1 to 4 carbon atoms; or $R_2$ and $R_3$ can be concatenated to form, together with the carbon atom to which they are attached, a cyclo-alkyl or a cyclo-alkenyl diradical of 5 to 15 carbon atoms which may be unsubstituted, or substituted with one or more alkyl or alkoxy groups of 1 to 4 carbon atoms;

III

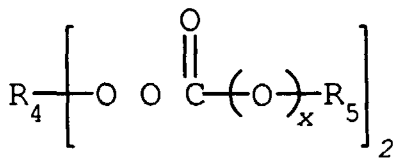

wherein $R_4$ is a bis t-alkyl diradical of 8-14 carbon atoms, or a bis t-cycloalkyl diradical of 7-14 carbon atoms, said diradicals may be unsubstituted, or substituted with one or more alkyl or alkoxy groups of 1-4 carbon atoms; x is 0 or 1; $R_5$ is an alkyl radical of 1 to 12 carbon atoms, an aralkyl radical of 7 to 14 carbon atoms, a cycloalkyl radical of 3 to 12 carbon atoms or a phenyl radical, said $R_5$ radicals may be unsubstituted, or substituted with one or more alkyl or alkoxy groups of 1 to 4 carbon atoms.

Elastomer-modified styrenic polymer compositions prepared with the peroxides represented by general formulas I, II and III typically have significantly greater rubber phase volumes and significantly larger rubber particle sizes

than similar compositions prepared with corresponding tertiary butyl peroxides (high-energy radical sources) heretofore believed superior for increasing gel content.

Therefore, an object of the present invention is to provide an improved process for producing an impact modified styrenic polymer.

Another object of the present invention is to provide a process for increasing the RPVF of such impact-modified styrenic polymer compositions.

Another object of this invention is to provide compositions with increased rubber particle size.

Still another object of the present invention is to provide styrenic molding materials suitable for fabrication into household goods, food packaging, electrical appliance parts and other consumer products having improved properties in use.

DESCRIPTION OF THE PREFERRED EMBODIMENTS

Styrenic monomers which may be used in the present invention include styrene, alpha-methylstyrene, para-methylstyrene, halogenated styrene such as para-chlorostyrene or mixtures thereof.

The above-mentioned styrenic monomers can be used alone or in combination with other monomers copolymerizable therewith. Examples of these co-monomers include acrylic monomers, such as acrylonitrile, methacrylonitrile, methacrylic acid, acrylic acid esters and methacrylic acid esters. Thus, as stated above, the styrenic polymers and copolymers, according to the present invention, include copolymers of the above-mentioned styrenic monomers with these and other similar types of co-monomers.

All the above monomers are well known articles of commerce and/or may be prepared by synthetic methods well known in the art

The process of the present invention uses one or more of the above-specified initiators to effect grafting of styrenic monomers and, optionally, co-monomers onto the backbone of unsaturated elastomers.

Examples of such elastomers include, but are not limited to, high-cis and medium-cis polybutadienes, polyisoprenes, styrene-butadiene block copolymers and mixtures thereof.

Such elastomers are also commercially available and/or may be prepared by synthetic methods well known in the art.

Organic peroxides suitable to provide both enhanced rubber phase volume and larger rubber particle size in the present invention are those represented by general formulas (I), (II) and (III).

These peroxides are also well known and are commercially available and/or may be prepared by synthetic methods well known in the art.

Specific examples of these organic peroxides include OO-t-amyl O-(2-ethylhexyl) monoperoxycarbonate, OO-t-amyl O-isopropyl monoperoxycarbonate, OO-t-amyl O-cyclohexyl monoperoxycarbonate, OO-t-amyl O-ethyl monoperoxycarbonate, OO-t-amyl O-dodecyl monoperoxycarbonate, OO-t-hexyl O-isopropyl monoperoxycarbonate, OO-t-octyl O-isopropyl monoperoxycarbonate, OO-t-octyl O-ethyl monoperoxycarbonate, 1,5-di(t-amylperoxycarbonyloxy)-3-oxapentane, 1,5-di(t-hexylperoxycarbonyloxy)-3-oxapentane, 1,5-di(t-octylperoxycarbonyloxy)-3-oxapentane, t-amyl peroxyacetate, t-amyl peroxypropionate, t-amyl peroxy-2-ethylhexanoate, t-amyl peroxybenzoate, t-hexyl peroxyacetate, t-hexyl peroxypropionate, t-octyl peroxyacetate, t-octyl peroxypropionate, t-octyl peroxybenzoate, 2,5-dimethyl-2,5-di(2-propoxycarbonylperoxy)hexane, 2,5-dimethyl-2,5-di(2-butoxycarbonylperoxy)hexane, 2,5-dimethyl-2,5-di(2-ethylhexanoylperoxy)hexane, 2,5-dimethyl-2,5-di(propanoylperoxy)hexane, 2,5-dimethyl-2,5-di(hexanoylperoxy)hexane, 1,1-di(t-amylperoxy)cyclohexane, 1,1-di(t-hexylperoxy)cyclohexane, 1,1-di(t-amylperoxy)-3,3,5-trimethylcyclohexane, 2,2-di(t-amylperoxy)butane, di(t-amyl) diperoxyadipate, di(t-octyl) diperoxyadipate, di(t-amyl) diperoxysuccinate, di(t-octyl) diperoxysuccinate, di(t-amyl) diperoxymalonate, di(t-octyl) diperoxymalonate and mixtures thereof.

Among these mentioned peroxides, preferred initiators include OO-t-amyl O-(2-ethylhexyl) monoperoxycarbonate, OO-t-amyl O-ethyl monoperoxycarbonate, OO-t-amyl O-isopropyl monoperoxycarbonate, 1,5-di(t-amylperoxycarbonyloxy)-3-oxapentane, t-amyl peroxyacetate and 1,1-di(t-amylperoxy)cyclohexane.

The polymerization according to the present invention is usually performed as a continuous bulk-type but can be performed as a batch polymerization.

The continuous bulk polymerization is carried out as follows: the monomer/elastomer/initiator solution is fed into a system consisting of 2 to 6 reactors of full mixing, flow-type and/or plug flow-type, and one or more monomer devolatilizing units. The reaction temperatures are between 90 and 190 degrees Centigrade. Preferably, the reaction temperature difference between consecutive reactors should be less than 40 degrees Centigrade. Small amounts of solvents such as ethylbenzene, toluene and xylene may also be added to the process. Other additives such as antioxidants, chain transfer agents, lubricating agents, mold release agents, flame retardants, weather resisting agents and colorants may also, optionally, be incorporated into the polymeric compositions prepared in the present process.

The impact modified styrenic polymer composition, upon discharge from the last reactor, is sent, optionally, to a heater and subsequently, to devolatilizing equipment. Conversion at this point is, preferably, between 40 and 90%

and the temperature has been increased to between 200 and 290 degrees Centigrade. Monomer(s) and other volatiles are then removed from the melt at the high temperature with pressures between 1 and 500 Torr. The melt stream is then cooled and pelletized. Residual monomer content of the composition is preferably below 2000 ppm and more preferably below 500 ppm.

Typically, the organic peroxides of formulas I, II and/or III used in the present invention are incorporated into the initial reaction stage of the process. The peroxide or peroxides are introduced in quantities ranging from about 20 ppm to 1000 ppm by weight with from about 20ppm to about 750 ppm being preferred. Conventional peroxides may be used in combination with the initiators represented by general formulas I, II and III as supplemental initiators and include, but are not limited to, such materials as 1,1-di(t-butylperoxy)cyclohexane, t-butyl peroxybenzoate, ethyl 3,3-di(t-butylperoxy)butyrate, di-t-amyl peroxide and 2,5-dimethyl-2,5-di-t-butylperoxy)hexane. These supplemental initiators can be added simultaneously in the initial feed with the organic peroxides represented by general formulas I, II and III, or fed separately to the reaction at an intermediate stage of the polymerization process. Such supplemental peroxides may be added in quantities up to about 300 ppm by weight with quantities up to about 250 ppm being preferred. Use of excessive quantities of these supplemental peroxides will be understood by one of skill in the art as being undesirable as such excessive use may compromise the ability of the final product to exhibit maximum desirable properties. However, because the supplemental peroxides are less expensive than the peroxides of Formulas I, II and III, a mixture of the two types may represent the best compromise between cost and performance.

DETERMINATION OF DEGREE OF GRAFTING (GEL CONTENT)

An accurately weighed amount (approx. 0.50-0.70g) of the post-cured sample of the elastomer modified polymer composition is dispersed in about 25g of toluene in a centrifuge tube (of known weight). The mixture is centrifuged at high RPM for about 15-20 minutes. The supernatant solution is pipetted or decanted from the gel residue. The gel is washed with fresh toluene (25g) and re-centrifuged. The supernatant solution is again decanted from the gel. The gel residue is dried by placing the centrifuge tube into a vacuum oven overnight at about 70 degrees Centigrade. The tube is allowed to cool to room temperature and weighed. The gel weight is determined by subtracting the known weight of the tube.

$$\text{Wt.\% insolubles} = (\text{gel weight}/\text{sample weight}) \times 100$$

$$\text{Wt.\% insoluble PS} = \text{Wt.\% insolubles} - \text{Wt.\% rubber}$$

$$\text{Degree of Grafting (\% Graft:Rubber Ratio)} = (\text{Wt.\% Insoluble PS}/\text{\%Rubber}) \times 100$$

DETERMINATION OF RUBBER PARTICLE SIZE

Particle size measurements were done using a Malvern Instruments Mastersizer S unit. The elastomer modified polymer compositions were dissolved/suspended in methyl ethyl ketone (MEK) solvent at concentrations consistent with the instrument manufacturer's recommendations. Particle diameters reported were those at the maximum of the sample's distribution curve.

The examples to follow are intended to further illustrate the best mode contemplated for the practice of the invention but not to limit its scope. Organic Peroxide initiators evaluated and compared include:

1. OO-t-amyl O-(2-ethylhexyl) monoperoxycarbonate (LUPEROX TAEC)
2. OO-t-butyl O-(2-ethylhexyl) monoperoxycarbonate (LUPEROX TBEC)
3. OO-t-amyl O-isopropyl monoperoxycarbonate
4. OO-t-butyl O-isopropyl monoperoxycarbonate (LUPEROX TBIC)
5. t-amyl peroxyacetate (LUPEROX 555)
6. t-butyl peroxyacetate (LUPEROX 7)
7. 1,1-di(t-amylperoxy)cyclohexane (LUPEROX 531)
8. 1,1-di(t-butylperoxy)cyclohexane (LUPEROX 331)

9. 1,5-di(t-amylperoxycarbonyloxy)-3-oxapentane

10. 1,5-di(t-butylperoxycarbonyloxy)-3-oxapentane

11. OO-t-amyl O-ethyl monoperoxycarbonate

Examples 1 through 11 used TAKTENE 1202 ("HIGH-CIS" elastomer product of BAYER CORPORATION) as the polybutadiene component of the prepared compositions.

Examples 12 through 22 used DIENE 55AC10 ("MEDIUM-CIS" elastomer product of FIRESTONE SYNTHETIC RUBBER AND LATEX CO.) as the polybutadiene component of the prepared compositions.

The terms "Medium-cis" and "High-cis" refer qualitatively to the different distribution of cis double bonds contained in the molecular structure of the respective polybutadienes.

As used herein and in the appended claims the term "ppm" means parts per million by weight based on based on monomer and any elastomers in the system, unless the context specifically requires otherwise.

<u>EXAMPLE 1</u>

A solution was prepared consisting of 423g styrene monomer (Aldrich Chemical), 27g of polybutadiene (Taktene 1202 from Bayer Corp.) and 22.5g of ethylbenzene (Aldrich Chemical). This mixture was transferred to a closed, one liter, jacketed, stainless steel reaction vessel equipped with a motorized stirrer, thermocouple, gas inlet/outlet valves, pressure gauge and bottom discharge valve. The stirrer was of modified anchor type, driven by a constant RPM motor. A circulating bath was used to supply heated oil to the thermally insulated reactor jacket. As the reactants were heating to temperature, the vessel was purged with nitrogen by a series of pressurization/ depressurization sequences. When the vessel temperature stabilized at 113°C, a sufficient amount of OO-t-amyl O-(2-ethylhexyl) monoperoxycarbonate dissolved in 1.0g of ethylbenzene was added to the mixture (through an addition port) to supply an initial active oxygen concentration (A[0]) of 20.8 ppm. The mixture was reacted for 2 hours under a nitrogen pressure of 60-70 psig. The partially polymerized mixture was discharged from the vessel into a suitable container and cooled in an ice/water bath.

Several grams of the partially polymerized mixture were placed into each of two 18 x 150 mm heavy wall Pyrex tubes and the tubes flame sealed under nitrogen. The ampules were immersed into an oil bath for two hours at 120°C then for an additional two hours at 180°C. This post curing procedure yielded finished samples of the elastomer modified polymer composition (in this case, HIPS) containing a known rubber content.

The post-cured HIPS specimens were removed from the ampules and the average degree of grafting was determined. The results can be found in Table 1.

<u>EXAMPLE 2</u>

The polymerization was carried out with the same procedure as in Example 1, except that analogous butyl peroxide (2) was used, the A[O] concentration was slightly lower at 19.5 ppm and the temperature was increased to approximately 117°C to equalize the initiator decomposition rates. Grafting and particle size data obtained are shown in Table 1. Comparison with Example 1 clearly shows higher degree of graft and larger particle size with the amyl peroxide of Example 1.

<u>EXAMPLE 3</u>

The polymerization was carried out with the same procedure as in Example 1, except that amyl peroxide (3) was used. Grafting and particle size data obtained are shown in Table 1.

<u>EXAMPLE 4</u>

The polymerization was carried out with the same procedure as in Example 3, except that analogous butyl peroxide (4) was used and the temperature was increased to approximately 117°C to equalize the initiator decomposition rates. Grafting and particle size data obtained are shown in Table 1. Comparison with Example 3 clearly shows higher degree of graft and larger particle size with the amyl peroxide of Example 3.

<u>EXAMPLE 5</u>

The polymerization was carried out with the same procedure as in Example 1, except that amyl peroxyester

(5) was used, the A[O] concentration was slightly lower at 19.5 ppm and the temperature was increased to 116°C. Grafting and particle size data obtained are shown in Table 1.

EXAMPLE 6

The polymerization was carried out with the same procedure as in Example 5 using analogous butyl peroxyester (6) and the temperature was increased to approximately 119°C to equalize the initiator decomposition rates. Grafting and particle size data obtained are shown in Table 1. Comparison with Example 5 clearly shows higher degree of graft and larger particle size with the amyl peroxide of Example 5.

EXAMPLE 7

The polymerization was carried out with the same procedure as in Example 1, except that amyl peroxyketal (7) was used, the A[O] concentration was placed at 19.5 ppm and the temperature was maintained at 113°C. Grafting and particle size data obtained are shown in Table 1.

EXAMPLE 8

The polymerization was carried out with the same procedure as in Example 7, except that analogous butyl peroxyketal (8) was used, the A[O] concentration was slightly lower at 19.4 ppm and the temperature was increased to approximately 118°C to equalize the initiator decomposition rates. Grafting and particle size data obtained are shown in Table 1. Comparison with Example 7 clearly shows higher degree of graft and larger particle size with the amyl peroxide of Example 7.

EXAMPLE 9

The polymerization was carried out using the procedure of Example 1, except that amyl diperoxide (9) was used and the temperature was increased to 115°C. Grafting and particle size data obtained are shown in Table 1.

EXAMPLE 10

The polymerization was carried out with the same procedure as in Example 9, except that analogous butyl diperoxide (10) was used and the temperature was increased to approximately 119°C to equalize the initiator decomposition rates. Grafting and particle size data obtained are shown in Table 1. Comparison with Example 9 clearly shows higher degree of graft and larger particle size with the amyl peroxide of Example 9.

EXAMPLE 11

The polymerization was carried out using the procedure of Example 1, except that amyl monoperoxycarbonate (11) was used. Grafting and particle size data obtained are shown in Table 1. Performance of this peroxide initiator was not compared to a butyl analog. However, from performance similarities to other peroxides in its class, it is anticipated that particle size and degree of grafting data from this elastomer composition would be greater than that obtained from the corresponding composition prepared with the analogous butyl initiator.

EXAMPLES 12 through 22

Examples 12 through 22 repeat (within experimental error) the procedures and conditions of Examples 1 through 11, respectively, except that DIENE 55AC10 ("MEDIUM-CIS" polybutadiene) was substituted for TAKTENE 1202 ("HIGH-CIS polybutadiene) on an equal weight basis to prepare the compositions. The grafting and particle size results/comparison using Diene 55AC10 are shown in Table 2.

TABLE 1

| DEGREE OF GRAFTING/PARTICLE SIZE PERFORMANCE COMPARISON FOR TARTENE 1202* | | | | | |
|---|---|---|---|---|---|
| EXAMPLE | PEROXIDE INITIATOR (type) | TEMP (C) | A[O] (ppm) | DEGREE OF GRAFTING | PARTICLE SIZE(μm) |
| 1 | 1 (amyl) | 113 | 20.8 | 273 | 4.50 |
| 2 | 2 (butyl) | 117 | 19.5 | 120 | 1.85 |
| 3 | 3 (amyl) | 113 | 20.8 | 277 | 4.47 |
| 4 | 4 (butyl) | 117 | 20.8 | 257 | 1.40 |
| 5 | 5 (amyl) | 116 | 19.5 | 250 | 5.51 |
| 6 | 6 (butyl) | 119 | 19.5 | 198 | 2.45 |
| 7 | 7 (amyl) | 113 | 19.5 | 209 | 4.80 |
| 8 | 8 (butyl) | 118 | 19.4 | 152 | 2.21 |
| 9 | 9 (amyl) | 115 | 20.8 | 207 | 3.85 |
| 10 | 10(butyl) | 119 | 20.8 | 120 | 1.83 |
| 11 | 11 (amyl) | 113 | 20.8 | 226 | 3.16 |

*HIGH-CIS PBD (BAYER CORP)

TABLE 2

| DEGREE OF GRAFTING/PARTICLE SIZE PERFORMANCE COMPARISON FOR FOR DIENE 55AC10* | | | | | |
|---|---|---|---|---|---|
| EXAMPLE | PEROXIDE INITIATOR (type) | TEMP (C) | A[O] (ppm) | DEGREE OF GRAFTING | PARTICLE SIZE(μm) |
| 12 | 1 (amyl) | 113 | 20.8 | 303 | 2.54 |
| 13 | 2 (butyl) | 117 | 19.5 | 154 | 1.15 |
| 14 | 3 (amyl) | 113 | 20.8 | 332 | 3.30 |
| 15 | 4 (butyl) | 117 | 20.8 | 322 | 1.55 |
| 16 | 5 (amyl) | 116 | 19.5 | 302 | 4.55 |
| 17 | 6 (butyl) | 119 | 19.5 | 272 | 2.15 |
| 18 | 7 (amyl) | 113 | 19.5 | 280 | 3.85 |
| 19 | 8 (butyl) | 118 | 19.5 | 263 | 1.77 |
| 20 | 9 (amyl) | 115 | 20.8 | 266 | 2.11 |
| 21 | 10(butyl) | 119 | 20.8 | 218 | 1.30 |
| 22 | 11 (amyl) | 113 | 20.8 | 328 | 3.60 |

*MEDIUM-CIS PBD (FIRESTONE SYNTHETIC RUBBER AND LATEX COMPANY)

It is obvious from the examples that any given butyl initiator analog is always run at a somewhat higher temperature than the amyl initiator. This is due to the fact that butyl peroxides have a slightly higher half life temperature than the corresponding amyl peroxides. In order to obtain valid performance comparisons, initiator decomposition rates should be equalized as much as possible. This was accomplished in the examples by adjusting the temperature used to run the polymerizations for amyl/butyl initiator analogs.

While recognizing that data points can have a margin for variability, it is clear from examination of Tables 1 and 2 that amyl peroxides provide higher degree of grafting and larger particle size than the corresponding butyl peroxides for both "HIGH-CIS" and "MEDIUM-CIS" types of polybutadiene (PBD) elastomer. It is especially noteworthy that elastomer-modified compositions prepared with amyl peroxides:

1. Produce rubber particles that are, on average, more than twice the diameter of those prepared with corresponding butyl peroxides with either type of PBD.
2. Produce gel contents with "HIGH-CIS" PBD that are, on average, more than 40% greater than those produced with corresponding butyl peroxides.
3. Produce gel contents with "MEDIUM-CIS PBD that are, on average, more than 20% greater than those produced with corresponding butyl peroxides.

These well-defined effects of amyl and butyl initiators on rubber particle size and gel content now suggest the possibility for more judicious selection of PBD type and/or initiator type(s) to obtain improved, more systematic control of these dispersed-phase properties in elastomer-modified polymer compositions. Such control has always been desirable, not well understood and often very difficult to achieve.

**Claims**

The subject matter which applicant regards as his invention is particularly pointed out and distinctly claimed as follows:

**1.** A process for producing an elastomer modified polymer composition which comprises polymerizing at least one styrenic monomer in the presence of 0.5 to 15 percent by weight (based on styrene monomer weight) of an unsaturated elastomer and 20 ppm to 1000 ppm by weight of one or more of the organic peroxides represented by the following general formulas:

I

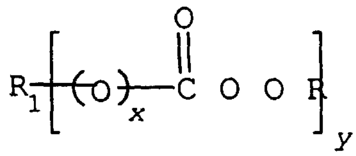

wherein x is 0 or 1; R is a t-alkyl radical of 5 to 10 carbon atoms, unsubstituted, or substituted with hydroxy, alkoxycarbonyloxy, or alkylcarbonyloxy groups, a t-aralkyl radical of 9 to 13 carbon atoms, or a t-cycloalkyl radical of 6 to 12 carbon atoms; y is 1 or 2;
when y=1, $R_1$ is an alkyl radical of 1 to 12 carbon atoms, an aralkyl radical of 7 to 14 carbon atoms, a cycloalkyl radical of 3 to 12 carbon atoms or a phenyl radical, said $R_1$ radicals may be unsubstituted, or substituted with one or more alkyl or alkoxy groups of 1 to 4 carbon atoms;
when y=2, $R_1$ is an alkyl diradical of 2 to 12 carbon atoms, an aralkyl diradical of 8 to 14 carbon atoms, a cycloalkyl diradical of 3 to 12 carbon atoms or a phenyl diradical, said diradicals may be unsubstituted, or may be substituted with one, or more alkyl or alkoxy groups of 1 to 4 carbon atoms;

II

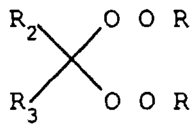

wherein R is as defined herein above; $R_2$ and $R_3$ are alkyl or alkenyl radicals of 1 to 12 carbon atoms, unsubstituted, or substituted with one or more alkyl or alkoxy groups of 1 to 4 carbon atoms; or $R_2$ and $R_3$ may be concatenated to form, together with the carbon atom to which they are attached, a cyclo-alkyl or a cyclo-alkenyl

diradical of 5 to 15 carbon atoms which may be unsubstituted, or substituted with one or more alkyl, or alkoxy groups of 1 to4 carbon atoms;

III

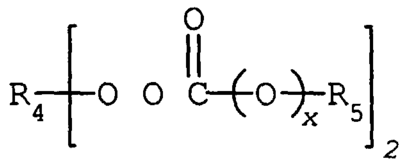

wherein $R_4$ is a bis t-alkyl diradical of 8-14 carbon atoms, or a bis t-cycloalkyl diradical of 7-14 carbon atoms, said diradicals may be unsubstituted or substituted with one or more alkyl or alkoxy groups of 1-4 carbon atoms; x is 0 or 1; $R_5$ is an alkyl radical of 1 to 12 carbon atoms, an aralkyl radical of 7 to 14 carbon atoms, a cycloalkyl radical of 3 to 12 carbon atoms or a phenyl radical and said $R_5$ radicals may be unsubstituted, or substituted with alkyl or alkoxy groups of 1 to 4 carbon atoms.

**2.** A process as defined in claim 1 wherein the organic peroxide is selected from the group consisting of:

OO-t-amyl O-(2-ethylhexyl) monoperoxycarbonate;
OO-t-amyl O-isopropyl monoperoxycarbonate;
t-amyl peroxyacetate;
1,1-di(t-amylperoxy)cyclohexane;
1,5-di-(t-amylperoxycarbonyloxy)-3-oxapentane;
OO-t-amyl O-ethyl monoperoxycarbonate; and
mixtures thereof.

**3.** A process as defined in claim 1 which is carried out in a set of two or more series connected reactors.

**4.** A process as defined in claim 3 wherein the set of two or more series connected reactors contains from 2 to six series connected reactors.

**5.** A process as defined in claim 4 wherein the process is carried out at from about 90°C to about 190°C, the temperature between consecutive reactors does not vary by more than 40°C and the organic peroxide of Formula I, II and/or III is present in concentration from about 20 to 750 ppm.

**6.** A process as defined in claim 1 wherein the styrenic monomer is selected from the group consisting of styrene, α-methyl styrene, para-methyl styrene, halogenated styrene and mixtures thereof.

**7.** A process as defined in claim 1 wherein the styrenic monomer is used in combination with one or more comonomers selected from the group consisting of acrylonitrile, methacrylonitrile, methacrylic acid, methyl methacrylate, butyl acrylate and mixtures thereof.

**8.** A process as defined in claim 1 wherein the unsaturated elastomer is selected from the group consisting of high-cis plybutadiene, medium-cis polybutadiene, polyisoprene, styrene-butadiene block copolymers and mixtures thereof.

**9.** A process as defined in claim 3 wherein the polymerization is a continuous bulk polymerization with the conversion of the styrenic monomer in the last reactor of the set of series connected reactors is from about 40% to about 90% by weight.

**10.** A process as defined in claim 1 wherein the polymer produced is recovered by conventional means.

**11.** A process as defined in claim 10 wherein the recovered polymer is fed to and treated in devolatilizing equipment maintained at about 200°C to about 290°C and the polymer resulting from said treatment has a residual monomer concentration below 2000 ppm by weight based on resin.

European Patent Office

# EUROPEAN SEARCH REPORT

Application Number
EP 00 10 7944

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 861 827 A (SOSA JOSE M ET AL) 29 August 1989 (1989-08-29) * column 5, line 42-64; claims * | 1-10 | C08F279/02 C08F291/02 |
| A | US 5 475 072 A (STEIN DARYL L ET AL) 12 December 1995 (1995-12-12) * column 17, line 30 - column 18, line 8 * | 1 | |

TECHNICAL FIELDS SEARCHED (Int.Cl.7)
C08F

The present search report has been drawn up for all claims

| Place of search | Date of completion of the search | Examiner |
|---|---|---|
| THE HAGUE | 4 July 2000 | Meulemans, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 10 7944

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2000

| Patent document cited in search report | Publication date | Patent family member(s) | Publication date |
|---|---|---|---|
| US 4861827 A | 29-08-1989 | BE 1002327 A | 11-12-1990 |
| | | CA 1331820 A | 30-08-1994 |
| | | CN 1036211 A,B | 11-10-1989 |
| | | DE 3852018 D | 08-12-1994 |
| | | DE 3852018 T | 06-04-1995 |
| | | EP 0323428 A | 05-07-1989 |
| | | KR 139068 B | 01-05-1998 |
| US 5475072 A | 12-12-1995 | AT 165820 T | 15-05-1998 |
| | | BR 9500031 A | 19-09-1995 |
| | | CA 2132563 A | 10-08-1995 |
| | | DE 69502307 D | 10-06-1998 |
| | | DE 69502307 T | 24-12-1998 |
| | | EP 0667339 A | 16-08-1995 |
| | | ES 2115998 T | 01-07-1998 |
| | | JP 7258211 A | 09-10-1995 |
| | | US 5489699 A | 06-02-1996 |
| | | US 5494988 A | 27-02-1996 |

EPO FORM P0459

For more details about this annex : see Official Journal of the European Patent Office, No. 12/82